# FASCICULE DE BREVET EUROPEEN

(11) **EP 0 550 364 B1**
(45) Date de publication et mention de la délivrance du brevet: **19.06.1996**
(21) Numéro de dépôt: 92440147.4
(22) Date de dépôt: 24.12.1992
(51) Int. Cl.: A47J 27/14, A47J 37/12, F24C 3/06

(54) **Module de chauffe indirecte à brûleur pour un ensemble basculant de cuisson de cuisine professionnelle**
Heizmodul mit Brenner zum indirekten Erhitzen eines kippbaren Kochbehälters für Grossküchen
Indirect heating device with burner for pivotable cooking vessel used in large-scale kitchens

(30) Priorité: 24.12.1991 FR 9116436
(43) Date de publication de la demande: 07.07.1993
(73) Titulaire: R. FRITSCH S.A. Société Anonyme dite:, 68270 Wittenheim (FR)
(72) Inventeur: Fritsch, Edgar, F-83230 Bormes les Mimosas (FR)
(74) Mandataire: Metz, Paul

(56) Documents cités:
- EP-A- 0 208 643
- FR-A- 551 083
- FR-A- 1 405 410
- FR-A- 1 434 952
- FR-A- 2 504 001
- GB-A- 438 519

## Description

La présente invention se rapporte à un module de chauffe indirecte destiné à un ensemble de cuisson pour cuisines professionnelles, de collectivité, de restauration ou autres.

Les ensembles de cuisson pour cuisines professionnelles visés par l'invention présentent un récipient, par exemple basculant appelé cuve, du type marmite, friteuse ou sauteuse, de volume important, dans lequel certains aliments de base sont cuits dans de l'eau, à la vapeur, ou frits dans de l'huile.

Ces cuves nécessitent une puissance de chauffe importante pour assurer une cuisson rapide des aliments compatible avec les exigences de rendement, mais aussi en raison, quelquefois, de l'utilisation du matériel en temps partagé.

Cette puissance est délivrée actuellement par des résistances électriques blindées, disposées dans une enceinte de confinement thermique située immédiatement sous le fond de la cuve utilisée pour cuire les aliments.

Ainsi, le module de chauffe est limité à une seule enceinte dans laquelle les résistances électriques surchauffent l'air de l'enceinte directement en contact avec le fond de la cuve.

Un tel module de chauffage est connu du document EP-A-0 208 643; ledit module est pourvu d'un dispositif de chauffage indirect, situé sous la cuve. Ce dispositif de chauffage est un ensemble à air pulsé composé d'une turbine brassant l'air d'une chambre de chauffe, porté à la bonne température par des résistances chauffantes.

La présente invention a pour but, d'une part de chauffer graduellement et sans surchauffe le fond d'une cuve de cuisson, et d'autre part de permettre l'utilisation d'un autre combustible par l'intermédiaire d'un brûleur, notamment à air soufflé, ou d'une rampe.

L'invention apporte deux avantages principaux.

Il s'agit, pour le premier, de l'indépendance par rapport à une source d'énergie électrique ou au réseau électrique, lui conférant mobilité et possibilité universelle d'usage, même dans les lieux les plus retirés.

Il s'agit ensuite d'une chauffe plus graduelle, régulière et plus uniforme dispensée par les moyens intermédiaires rayonnants utilisés pour la transmission de chaleur.

L'ensemble de ces résultats et avantages est obtenu par le module de chauffe indirecte conforme à l'invention pour un ensemble de cuisson à cuve basculante de cuisine professionnelle, collective ou de restauration, caractérisé en ce que le fond de la cuve de cuisson délimite avec son volume récepteur une enceinte de chauffe indirecte à sole radiante constituée par la paroi horizontale supérieure de séparation avec la chambre de combustion d'un brûleur ou d'une rampe et ladite enceinte de chauffe, et en ce que cette dernière est équipée d'un moyen générateur d'une turbulence d'air.

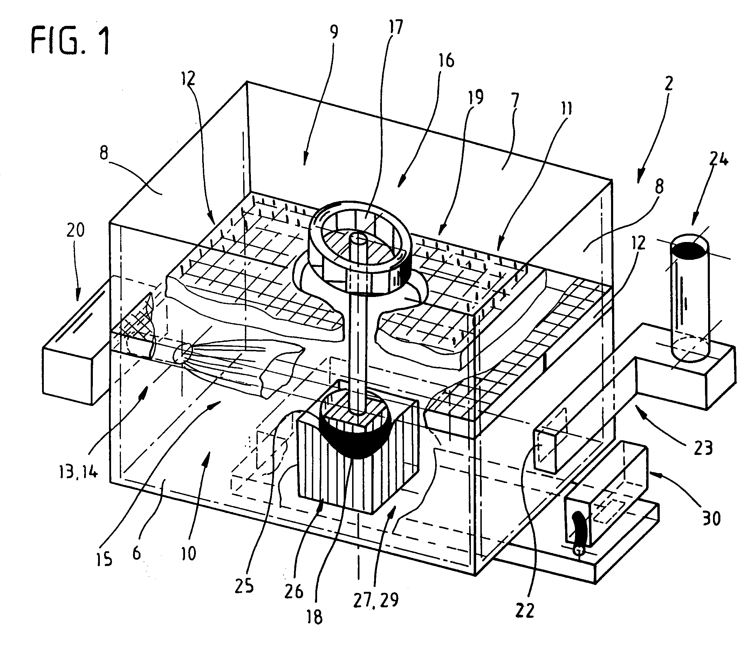

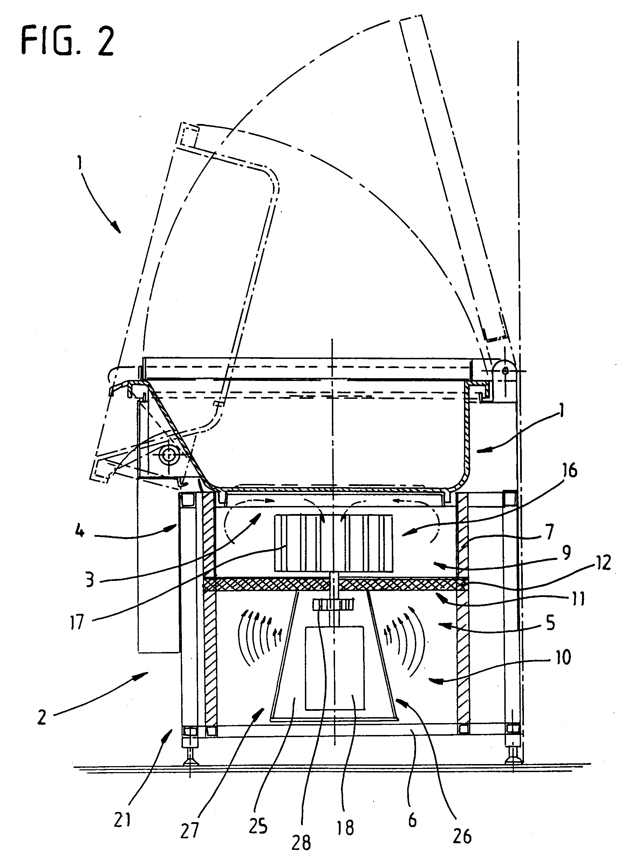

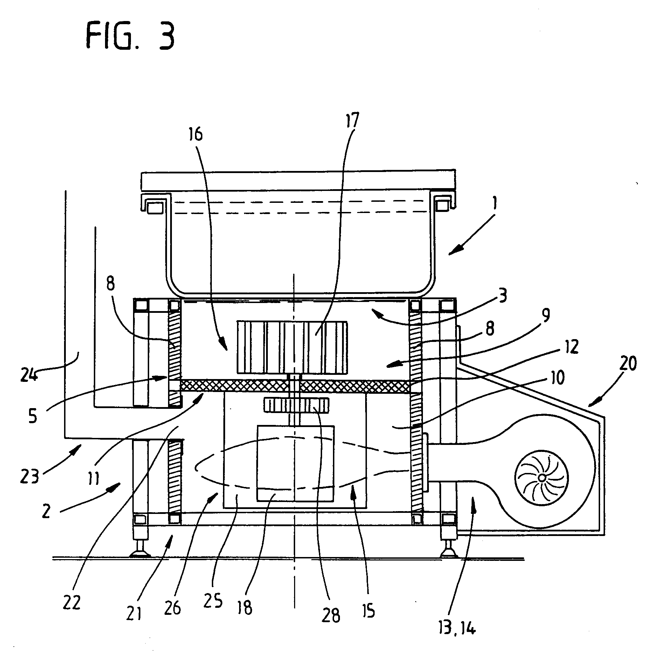

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue schématique en perspective simplifiée montrant en transparent la chambre de combustion et l'enceinte de chauffe, destinée à illustrer la constitution générale du module de chauffe selon l'invention ;
. la figure 2 et une vue en coupe longitudinale le long du brûleur d'un ensemble de cuisson comportant le module de chauffe selon l'invention ;
. la figure 3 est une vue en coupe transversale médiane d'un ensemble de cuisson comportant le module de chauffe selon l'invention.

La présente invention s'applique à des ensembles de cuisson pour cuisines professionnelles, collectives, de restauration ou autres, comprenant une cuve de cuisson 1, par exemple basculante, servant de récipient aux aliments à cuire, et un module de chauffe 2 destiné à chauffer suffisamment la cuve 1 par son fond 3 pour cuire les aliments.

La cuve de cuisson 1 repose, par son rebord, sur la partie supérieure périphérique d'un caisson 4 définissant un volume récepteur 5 délimité par un fond 6 et des parois latérales longitudinales 7 et transversales 8 recouvertes d'une isolation thermique.

La partie supérieure de ce volume est obturée par le fond 3 de la cuve 1 en position de cuisson.

Selon l'invention, la partie inférieure extérieure du fond 3 de la cuve de cuisson 1 légèrement engagé dans le volume récepteur 5 délimite une enceinte de chauffe 9, qui se prolonge en-dessous par une chambre de combustion 10.

L'enceinte de chauffe 9 comporte une sole radiante 11 sous la forme d'une plaque ou de plusieurs plaques de fond 12 constituant un plan de séparation avec un volume inférieur calorifugé constituant la chambre de combustion 10 occupée par un organe générateur de chaleur 13 à combustible liquide ou gazeux du type rampe à gaz ou brûleur à air soufflé 14 développant une flamme 15 dans ladite chambre de combustion ou une rampe de flammes multiples.

La chambre de combustion 10 admet tous les types de brûleurs à combustible gazeux, liquide ou solide.

Comme indiqué, l'enceinte de chauffe 9 et la chambre de combustion 10 sont convenablement protégées et isolées thermiquement par un revêtement approprié de leurs parois ou tout autre moyen.

Dans l'enceinte de chauffe 9 est prévu un générateur 16 de turbulence ou de brassage de l'air réalisé par exemple sous la forme d'une turbine 17, par exemple en position centrale, entraînée par un moteur 18.

La sole 11 formant un plan de séparation avec la chambre de combustion 10 est constituée par la juxtaposition des plaques de fond 12. Celles-ci, réalisées en un matériau réfractaire, pourvues de picots 19 d'échange thermique sur leur face supérieure, sont chauffées par les gaz de combustion. Elles transmettent les calories par rayonnement vers le haut afin de chauffer l'air contenu dans le volume de l'enceinte de chauffe 9.

Cet effet est amplifié par le brassage et la circulation de l'air engendrés par la turbine 17. Les calories sont emportées par le courant d'air vers le fond 3 de la cuve 1.

Cet air chauffé arrive en contact continu avec le fond 3 de la cuve 1 et porte celui-ci à une température homogène suffisamment élevée pour réaliser la cuisson.

Le brûleur est recouvert d'un capot de protection 20 et fixé sur une des parois transversale ou longitudinale de la chambre de combustion 10. Celle-ci est portée par un bâti 21 formant l'ossature de l'ensemble de cuisson.

Les gaz de combustion s'échappent par une sortie latérale 22 pratiquée, par exemple, dans la paroi opposée à celle sur laquelle est fixé le brûleur 14 (figures 1 et 3) ou une des parois adjacentes, et sont évacués par un conduit 23 communiquant avec une cheminée 24 représentée sur la figure 1.

La chambre de combustion 10 présente, dans sa partie centrale, un volume 25 protégé de la flamme du brûleur par un carter 26, par exemple enfermé dans un tunnel 27 abritant le moteur 18 entraînant la turbine 17 du générateur 16 de brassage de l'air dans l'enceinte de chauffe.

Pour éviter une montée excessive de chaleur, le volume intérieur du tunnel 27 est, si nécessaire, ventilé, par exemple à l'aide d'une turbine annexe 28 montée sur l'arbre d'entraînement du moteur 18 (figures 2 et 3).

Le même effet peut être obtenu par un compartiment 29, se confondant avec le tunnel 27, ventilé par un groupe indépendant non représenté. Celui-ci sert également de raccordement électrique par un boîtier de connexion 30.

Ce chauffage indirect par l'intermédiaire d'une enceinte de chauffe à air turbulent circulatoire assure une cuisson régulière et homogène sans montée brutale de la température et sans surchauffe.

Par ailleurs, la puissance calorique importante de la flamme permet d'augmenter les capacités et le volume de cuisson indépendamment des difficultés de fourniture en énergie électrique rencontrées dans certaines installations et sur certains lieux.

## Revendications

1. Module de chauffe indirecte pour cuve de cuisson (1) telle que friteuse, marmite ou autres, réalisant la cuisson de produits alimentaires dans les cuisines professionnelles, collectives ou de restauration, caractérisé en ce que le fond (3) de la cuve de cuisson délimite, avec le module de chauffe, une enceinte de chauffe (9) à sole radiante (11) constituée par la paroi horizontale supérieure de séparation entre une chambre de combustion (10) inférieure équipée d'un brûleur (14) et ladite enceinte de chauffe (9), et en ce que cette dernière est pourvue d'un moyen générateur d'une turbulence d'air.

2. Module selon la revendication 1, caractérisé en ce que le moyen générateur de la turbulence d'air est une turbine (18).

3. Module selon les revendications 1 et 2, caractérisé en ce que la turbine (18) est disposée en position centrale.

4. Module selon les revendications précédentes, caractérisé en ce que le brûleur (14) est à air soufflé.

5. Module selon les revendications de 1 à 3, caractérisé en ce que le brûleur (14) est une rampe à gaz.

6. Module selon la revendication 1, caractérisé en ce que la paroi de séparation est réalisée en plaques (12) d'un matériau réfractaire.

7. Module selon la revendication 6, caractérisé en ce que les plaques (12) sont équipées de picots (19) sur leur face supérieure.

8. Module selon les revendications précédentes, caractérisé en ce que la chambre de combustion (10) est traversée par un tunnel (27) abritant le moteur (18) d'entraînement de la turbine.

9. Module selon la revendication 8, caractérisé en ce que le tunnel (27) est ventilé.

10. Module selon la revendication 9, caractérisé en ce que le tunnel est ventilé par une turbine annexe (28) montée sur l'arbre d'entraînement du moteur (18).

## Claims

1. Indirect heating module for a cooking vessel (1) such as a deep fryer, cooking pot or other vessel, used for the cooking of foodstuffs in industrial, communal or restaurant kitchens, characterised in that the base (3) of the cooking vessel delimits, with the heating module, a heating space (9) with a single radiant (11), formed of the horizontal upper wall which separates a lower combustion chamber (10) equipped with a burner (14) from said heating space (9), and in that this latter is provided with a means for generating an air turbulence.

2. Module according to Claim 1, characterised in that the means for generating the air turbulence is a turbine (18).

3. Module according to Claims 1 and 2, characterised in that the turbine (18) is arranged in a central position.

4. Module according to the preceding Claims, characterised in that the burner (14) is a blast air furnace.

5. Module according to Claim 1 to 3, characterised in that the burner (14) is a pipe burner.

6. Module according to Claim 1, characterised in that the separating wall is formed of plates (12) of a refractive material.

7. Module according to Claim 6, characterised in that the plates (12) are provided with splinters (19) on the upper surface thereof.

8. Module according to the preceding Claims, characterised in that a tunnel (27) passes through the combustion chamber (10), the tunnel screening the motors (18) which drives the turbine.

9. Module according to Claim 8, characterised in that the tunnel (27) is ventilated.

10. Module according to Claim 9, characterised in that the tunnel is ventilated by a supplementary turbine (28) mounted on the driving shaft of the motor (18).

## Patentansprüche

1. Einheit zum indirekten Heizen eines Kochbehälters (1), wie einer Friteuse, eines Kochtopfes oder anderem, zum Kochen von Nahrungsmitteln in Großküchen, Gemeinschaftsküchen oder Restaurantküchen, dadurch gekennzeichnet, daß der Boden (3) des Kochbehälters gemeinsam mit der Heizeinheit einen Heizraum (9) mit einer Heizsohle (11) bestimmt, welche durch die obere horizontale Trennwand zwischen einer mit einem Brenner (14) versehenen unteren Verbrennungskammer (10) und dem Heizraum (9) gebildet ist, und daß dieser letztere mit einer Luftverwirbelungen erzeugenden Einrichtung versehen ist.

2. Einheit nach Anspruch 1, dadurch gekennzeichnet, daß die Einrichtung zur Erzeugung einer Luftverwirbelung eine Turbine (17) ist.

3. Einheit nach Anspruch 1 und 2, dadurch gekennzeichnet, daß die Turbine (17) in zentraler Lage angeordnet ist.

4. Einheit nach einem der vorangehenden Ansprüche, dadurch gekennzeichnet, daß der Brenner (14) ein Gasbrenner mit Gebläse ist.

5. Einheit nach einem der Ansprüche 1 bis 3, dadurch gekennzeichnet, daß der Brenner (14) ein Reihenbrenner ist.

6. Einheit nach Anspruch 1, dadurch gekennzeichnet, daß die Trennwand durch Platten (12) aus hitzebeständigem Material gebildet ist.

7. Einheit nach Anspruch 6, dadurch gekennzeichnet, daß die Platten (12) an ihrer Oberseite mit Brennspitzen (19) versehen sind.

8. Einheit nach einem der vorangehenden Ansprüche, dadurch gekennzeichnet, daß die Verbrennungskammer (10) von einem Kanal (27) durchquert ist, welcher den Antriebsmotor (18) der Turbine abschirmt.

9. Einheit nach Anspruch 8, dadurch gekennzeichnet, daß der Kanal (27) belüftet ist.

10. Einheit nach Anspruch 9, dadurch gekennzeichnet, daß der Kanal durch eine zusätzliche, an der Antriebswelle des Motors (18) festgelegte Turbine (28) belüftet ist.
